(19) Europäisches Patentamt / European Patent Office / Office européen des brevets

(11) **EP 4 203 294 A1**

(12) **EUROPÄISCHE PATENTANMELDUNG**

(43) Veröffentlichungstag:
   **28.06.2023   Patentblatt 2023/26**

(21) Anmeldenummer: **21217364.5**

(22) Anmeldetag: **23.12.2021**

(51) Internationale Patentklassifikation (IPC):
   **H02M 7/5395** (2006.01)   **H02M 1/12** (2006.01)
   **H02M 1/44** (2007.01)   **H02M 1/00** (2006.01)

(52) Gemeinsame Patentklassifikation (CPC):
   **H02M 7/5395; H02M 1/007; H02M 1/12; H02M 1/123; H02M 1/44**

(84) Benannte Vertragsstaaten:
   **AL AT BE BG CH CY CZ DE DK EE ES FI FR GB GR HR HU IE IS IT LI LT LU LV MC MK MT NL NO PL PT RO RS SE SI SK SM TR**
   Benannte Erstreckungsstaaten:
   **BA ME**
   Benannte Validierungsstaaten:
   **KH MA MD TN**

(71) Anmelder: **FRONIUS INTERNATIONAL GmbH 4643 Pettenbach (AT)**

(72) Erfinder:
   • **KREUZER, Harald**
     **4643 Pettenbach (AT)**
   • **PIELER, Roland**
     **4643 Pettenbach (AT)**
   • **PERNEGGER, Christoph**
     **4643 Pettenbach (AT)**
   • **GRASBÖCK, Richard**
     **4643 Pettenbach (AT)**

(74) Vertreter: **SONN Patentanwälte OG Riemergasse 14 1010 Wien (AT)**

(54) **VERFAHREN ZUM BETREIBEN EINER WECHSELRICHTER-ANORDNUNG UND WECHSELRICHTER-ANORDNUNG ZUR DURCHFÜHRUNG DES VERFAHRENS**

(57)   Verfahren zum Betreiben einer Wechselrichter-Anordnung (1) mit zumindest einem Wechselrichter (2) zur Umwandlung einer Gleichspannung ($U_{DC}$) in eine Wechselspannung ($U_{AC}$), wobei in jedem Wechselrichter (2) die Gleichspannung ($U_{DC}$) einer DC-Quelle (3) über einen DC/DC-Wandler (5) auf eine Zwischenkreisspannung ($U_{ZK}$) transformiert wird, in einem DC/AC-Wandler (6) in die Wechselspannung ($U_{AC}$) umgewandelt und an den AC-Ausgängen (10, 11) ausgegeben und in ein Versorgungsnetz (12) eingespeist wird, sowie eine Wechselrichter-Anordnung (1). Zur Reduktion des Risikos einer FI-Schutzschalter-Auslösung wird vor dem Einspeisen der Wechselspannung ($U_{AC}$) die Ableitkapazität ($C_{iso}$) am DC-Eingang (4) jedes Wechselrichters (2) gegen Erde (PE) bestimmt, und ermittelt, welcher AC-Ausgang (10, 11) an welcher Leitung (L, N) des Versorgungsnetzes (12) angeschlossen ist, und unter Berücksichtigung der Ableitkapazität ($C_{iso}$) und eines definierten maximalen Ableitstromes ($I_{A,max}$) sowie der Anschlusssituation am AC-Ausgang (10, 11) die Leistungsteile (7, 8) jedes Wechselrichters (2) derart moduliert werden, dass die Amplituden der Spannungen ($U_{10}$, $U_{11}$) an den AC-Ausgängen (10, 11) der Leistungsteile (7, 8) unterschiedlich groß sind.

Fig. 4

EP 4 203 294 A1

## Beschreibung

Die Erfindung betrifft ein Verfahren zum Betreiben einer Wechselrichter-Anordnung mit zumindest einem Wechselrichter zur Umwandlung jeweils einer Gleichspannung in eine Wechselspannung mit einer Netzfrequenz, wobei in jedem Wechselrichter die Gleichspannung einer an einem DC-Eingang angeschlossenen DC-Quelle über einen DC/DC-Wandler auf eine Zwischenkreisspannung transformiert wird und die Zwischenkreisspannung in einem DC/AC-Wandler mit zwei mit jeweils einem AC-Ausgang verbundenen Leistungsteilen, welche von einer Steuereinrichtung wechselseitig moduliert werden, in die Wechselspannung umgewandelt und an den AC-Ausgängen ausgegeben wird und die Wechselspannung in ein mit den AC-Ausgängen verbundenes Versorgungsnetz eingespeist wird.

Weiters betrifft die Erfindung eine Wechselrichter-Anordnung mit zumindest einem Wechselrichter zur Umwandlung jeweils einer Gleichspannung in eine Wechselspannung mit einer Netzfrequenz, wobei jeder Wechselrichter einen DC/DC-Wandler zum Transformieren der Gleichspannung einer an einem DC-Eingang angeschlossenen DC-Quelle in eine Zwischenkreisspannung, einen DC/AC-Wandler mit zwei Leistungsteilen zur Umwandlung der Zwischenkreisspannung in die Wechselspannung aufweist, wobei eine Steuereinrichtung zur Modulation der Leistungsteile jedes Wechselrichters vorgesehen ist.

Unter den Begriff Wechselrichter-Anordnung fallen Anordnungen bestehend aus einem oder aus mehreren Wechselrichtern, welche jeweils mit entsprechenden DC-Quellen, insbesondere Photovoltaik-Modulen oder Strings an Photovoltaik-Modulen am Eingang verbunden sind und deren Ausgang mit dem Versorgungsnetz verbunden ist. Im Falle einer Wechselrichter-Anordnung mit mehreren Wechselrichtern können alle Wechselrichter unabhängig voneinander angesteuert werden oder diese miteinander über Kommunikationsleitungen verbunden sein, sodass deren Funktionen koordiniert werden können.

Im Besonderen betrifft die vorliegende Erfindung moderne einphasige Wechselrichter ohne Transformator (transformatorlose Wechselrichter), welche eine Gleichspannung in eine Wechselspannung mit einer Netzfrequenz umwandeln, indem die Gleichspannung einer Gleichspannungsquelle, beispielsweise eines Photovoltaik-Moduls, über einen DC/DC-Wandler auf eine Zwischenkreisspannung transformiert und die Zwischenkreisspannung in einem DC/AC-Wandler in die gewünschte Wechselspannung umgewandelt wird, welche zum Betreiben von Verbrauchern oder zum Einspeisen in ein Versorgungsnetz verwendet wird. Der DC/AC-Wandler weist zwei Leistungsteile mit Halbleiterschaltern auf, welche von einer Steuereinrichtung entsprechend moduliert werden. Im Gegensatz zu Wechselrichtern mit Transformatoren haben transformatorlose Wechselrichter einen wesentlich höheren Wirkungsgrad.

Wechselrichter ohne Transformatoren und ohne galvanische Isolation erzeugen durch die Modulation (Pulsweitenmodulation PWM) an der DC-Quelle, insbesondere am Photovoltaik-Generator, eine netzabhängige Potentialänderung. Diese Potentialänderung erzeugt durch nicht vermeidbare parasitäre Kapazitäten und Isolationswiderständen zwischen Komponenten der Wechselrichter-Anordnung, insbesondere zwischen den Photovoltaik-Modulen, und Erde Ableitströme gegen Erde. Unzulässig hohe Ableitströme können dazu führen, dass beim Zuschalten des Wechselrichters an das Versorgungsnetz ein zwingend vorgeschriebener Fehlerstrom-Schutzschalter (FI-Schutzschalter) auslöst. Durch das Auslösen des FI-Schutzschalters können unter Umständen auch andere Geräte ungewollt vom Versorgungsnetz getrennt werden. Das Einschalten des FI-Schutzschalters erfordert eine manuelle Tätigkeit und somit die Anwesenheit einer Person. Aus diesem Grund ist es üblich, den Ableitstrom bzw. die dafür verantwortliche Ableitkapazität und allenfalls den Isolationswiderstand zu ermitteln und im Falle des Überschreitens eines maximal zulässigen Ableitstromes das Zuschalten des Wechselrichters an das Versorgungsnetz zu verhindern. Erst nachdem die Ursachen für den hohen Ableitstrom behoben und der FI-Schutzschalter wieder geschlossen wurde, steht die im Wechselrichter erzeugte Wechselspannung wieder zum Versorgen von Verbrauchern mit elektrischer Energie oder zur Einspeisung ins Versorgungsnetz zur Verfügung. Davor kann die umgewandelte Energie nicht verwertet werden, was sich in einer schlechteren Energiebilanz ausdrückt. Der Betreiber der Wechselrichter-Anordnung verliert dadurch wertvolle Einspeisezeit, Einspeiseleistung und Einspeiseenergie und damit Geld. Die verlorene Einspeisezeit, -leistung und -energie steigt proportional mit der Größe der Wechselrichter-Anordnung. Bei leistungsstarken Anlagen können sich sehr hohe Ertragseinbußen ergeben.

Die EP 3 465 897 B1 beschreibt ein Verfahren zum Betreiben eines einzelnen transformatorlosen Wechselrichters, wobei bei Überschreiten eines Grenzwerts für den Ableitstrom der Wechselrichter entsprechend angesteuert bzw. mit einem speziellen Taktverfahren betrieben wird, durch welches der Ableitstrom reduziert werden kann. Dies ermöglicht zwar eine Zuschaltung des Wechselrichters, wie sie sonst nicht zulässig gewesen wäre, die resultierende Energiebilanz ist aber dennoch reduziert und der Betreiber muss entsprechende Ertragseinbußen in Kauf nehmen. Darüber hinaus ist die Ermittlung des Ableitstroms mit einem gewissen Aufwand verbunden.

Die Aufgabe der vorliegenden Erfindung besteht in der Schaffung eines oben genannten Verfahrens zum Betreiben einer Wechselrichter-Anordnung und einer Wechselrichter-Anordnung zur Durchführung dieses Verfahrens, durch welche sichergestellt werden soll, dass auch bei höheren erwarteten Ableitströmen eine Zuschaltung der Wechselrichter-Anordnung an das Versorgungsnetz ermöglicht wird und auch dann eine Verwertung der umgewandelten Energie für eine bessere Energiebilanz stattfinden kann. Das Verfahren und die Wechselrichter-Anordnung sollen möglichst einfach und kostengünstig implementierbar sein und dem Betreiber keine wesentlichen Mehrkosten verursachen. Nachteile bisheriger Verfahren oder Vorrichtungen sollen verhindert oder zumindest reduziert werden.

Gelöst wird die erfindungsgemäße Aufgabe in verfahrensmäßiger Hinsicht dadurch, dass vor dem Einspeisen der Wechselspannung in das Versorgungsnetz die Ableitkapazität am DC-Eingang jedes Wechselrichters gegen Erde bestimmt wird, und ermittelt wird, welcher AC-Ausgang an welcher Leitung des Versorgungsnetzes angeschlossen ist, und unter Berücksichtigung der Ableitkapazität und eines definierten maximalen Ableitstromes sowie der ermittelten Anschlusssituation am AC-Ausgang die Leistungsteile jedes Wechselrichters derart moduliert werden, dass die Amplituden der Spannungen an den AC-Ausgängen der Leistungsteile unterschiedlich groß sind. Das erfindungsgemäße Verfahren sieht ohne Messung des tatsächlichen Ableitstromes vor, die Ableitkapazität am DC-Eingang jedes Wechselrichters zu bestimmen und daraus bei Kenntnis des maximalen Ableitstromes sowie der Anschlusssituation des Wechselrichters an den Leitungen des Versorgungsnetzes die Modulation der Leistungsteile jedes Wechselrichters entsprechend anzupassen und die üblicherweise gleich großen Amplituden der Spannungen an den Ausgängen der Leistungsteile entsprechend zu verschieben bzw. unsymmetrisch anzuordnen. Während bisher die beiden Leistungsteile jedes Wechselrichters so moduliert wurden, dass gegenläufige Wechselspannungen mit gleicher Amplitude resultieren, erfolgt nun die Ansteuerung asymmetrisch, mit unterschiedlichen Amplituden der Spannungen an den AC-Ausgängen der Leistungsteile. Dadurch werden die Ableitströme minimiert bzw. optimiert und es ist somit auch dann eine Zuschaltung des Wechselrichters ohne die Gefahr einer Überschreitung des maximalen Ableitstromes und der Auslösung des FI-Schutzschalters möglich. Somit kann der jeweilige Wechselrichter auch dann positiv zur resultierenden Energiebilanz beitragen, wo er nach dem Stand der Technik deaktiviert bleiben müsste. Da der kapazitive Ableitstrom gegenüber dem ohmschen Ableitstrom üblicherweise wesentlich größer ist, wird vorrangig die Ableitkapazität, also der kapazitive Anteil des komplexen Isolationswiderstandes und nicht der ohmsche Anteil, der Isolationswiderstand, ermittelt und berücksichtigt. Die Ermittlung der Ableitkapazität bzw. Anlagenkapazität kann beispielsweise nach der in der EP 3 879 283 A1 beschriebenen Methode erfolgen.

Die jeweilige Anschlusssituation des Wechselrichters an den Leitungen des Versorgungsnetzes, also welcher AC-Ausgang des Wechselrichters am Neutralleiter und welcher AC-Anschluss des Wechselrichters am Phasenanschluss des Versorgungsnetzes angeschlossen ist, kann durch manuelle Eingabe am Wechselrichter eingestellt oder unter Umständen auch automatisch ermittelt werden. Beispielsweise kann die Anschlusssituation bereits bei der Montage des Wechselrichters festgelegt und in geeigneter Weise hinterlegt oder gespeichert werden. Das erfindungsgemäße Verfahren greift dann auf diese hinterlegten oder gespeicherten Daten zu und kennt somit die Anschlusssituation. Eine Möglichkeit einer automatischen Ermittlung der Anschlusssituation besteht beispielsweise darin, dass die Spannung in einer allenfalls vorhandenen Messeinheit zur Ermittlung des Isolationswidersands gemessen wird, und danach nur ein Leistungsteil mit dem Versorgungsnetz verbunden wird und die Spannung in der Messeinheit ein zweites Mal gemessen wird. Wenn der Wechselspannungsanteil bei der zweiten Messung gegenüber der ersten Messung größer geworden ist, kann man daraus schließen, dass der mit dem Versorgungsnetz verbundene Leistungsteil mit dem Phasenanschluss (L) des Versorgungsnetzes verbunden ist, und das andere Leistungsteil somit mit dem Neutralleiter (N). In weiterer Folge kann noch der Gegenversuch mit dem anderen Leistungsteil durchgeführt werden, also nur der andere Leistungsteil mit dem Versorgungsnetz verbunden werden. Danach werden wieder die Wechselspannungsanteile der Spannungen bei beiden Messungen verglichen.

Das erfindungsgemäße Verfahren ist insbesondere auf Wechselrichter-Anordnungen mit mehreren Wechselrichtern, also leistungsstärkere Anlagen anwendbar.

Gemäß einem Merkmal des erfindungsgemäßen Verfahrens kann die Anschlusssituation am AC-Ausgang bei der Modulation der Leistungsteile jedes Wechselrichters derart berücksichtigt werden, indem die Modulation des am Phasenanschluss des Versorgungsnetzes angeschlossene Leistungsteil des DC/AC-Wandlers derart erfolgt, dass am AC-Ausgang dieses Leistungsteils die Spannung mit der größeren Amplitude resultiert, und die Modulation des am Neutralleiter des Versorgungsnetzes angeschlossenen Leistungsteils des DC/AC-Wandlers derart erfolgt, dass am AC-Ausgang dieses Leistungsteils die Spannung mit der kleineren Amplitude resultiert.

Üblicherweise werden die Leistungsteile jedes Wechselrichters mit einer vorgegebenen Schaltfrequenz wechselweise pulsweitenmoduliert. Andere Modulationsverfahren, welche die beiden Leistungsteile entsprechend ansteuern, sodass die gewünschte Ausgangswechselspannung resultiert, sind auch denkbar.

Wenn im Falle des Erreichens des maximalen Ableitstromes eine vorgegebene Zeitdauer gewartet wird und vor dem Einspeisen der Wechselspannung in das Versorgungsnetz die Ableitkapazität am DC-Eingang jedes Wechselrichters gegen Erde erneut bestimmt wird und erneut überprüft wird, ob der definierte maximale Ableitstrom überschritten wird, kann nach Ablauf dieser vorgegebenen Zeitdauer erneut überprüft werden, ob ein Zuschalten des jeweiligen Wechselrichters der Wechselrichter-Anordnung ohne die Gefahr eines Auslösens des FI-Schutzschalter möglich ist. Beispielsweise kann die vorgegebene Zeitdauer im Bereich einiger Minuten, beispielsweise 5 min, liegen. In dieser Zeit können Änderungen der Ableitkapazität eintreten, welche eine neuerliche Überprüfung rechtfertigen können.

Die Modulation der Leistungteile jedes Wechselrichters in Abhängigkeit der gemessenen Ableitkapazität wird innerhalb vorgegebener Grenzen vorzugsweise linear verändert. Die Grenzen werden beispielsweise durch Extremwerte der Ableitkapazität definiert, welche auf eine fehlerhafte Bestimmung oder eine defekte Hardware der Wechselrichter-Anordnung hinweisen könnten.

Wenn bei den vorgegebenen Grenzen eine Reserve berücksichtigt wird, können zusätzlich zu den Ableitströmen der Wechselrichter-Anordnung auch allfällige Ableitströme anderer Geräte, beispielsweise einer am Versorgungsnetz angeschlossenen Waschmaschine als Verbraucher, berücksichtigt werden.

Bei Erreichen vorgegebener oberer Grenzwerte für die gemessenen Ableitkapazität jedes Wechselrichters bleibt der jeweilige Wechselrichter vorzugsweise deaktiviert oder wird der jeweilige Wechselrichter deaktiviert. Die Grenzwerte für die Ableitkapazität werden erfahrungsgemäß gewählt und vorgegeben.

Vorteilhafterweise wird vor dem Einspeisebetrieb des zumindest einen Wechselrichters auch der ohmsche Isolationswiderstand am DC-Eingang jedes Wechselrichters gegen Erde gemessen und bei der Modulation der Leistungteile zusätzlich zur Ableitkapazität berücksichtigt. Wie bereits oben erwähnt, ist der Einfluss des ohmschen Isolationswiderstandes im Gegensatz zu jenem der Ableitkapazität üblicherweise sehr gering oder sogar vernachlässigbar. Bei Berücksichtigung auch des ohmschen Anteils des komplexen Isolationswiderstandes kann aber ein noch effizienterer Betrieb der Wechselrichter-Anordnung erzielt werden. Die Ermittlung des ohmschen Isolationswiderstandes kann beispielsweise nach der in der EP 3 879 277 A1 beschriebenen Methode erfolgen.

Gemäß einem weiteren Merkmal der Erfindung kann der Ort einer Verbindung der DC-Quelle zur Erde ermittelt werden und der ermittelte Ort bei der Modulation der Leistungteile der Wechselrichter ebenfalls berücksichtigt werden. Beispielsweise kann für die Modulation relevant sein, ob der Erdschluss im Bereich des positiven oder negativen Anschlusses des DC-Eingangs des Wechselrichters oder zwischen einzelnen DC-Quellen, insbesondere Photovoltaik-Modulen etc. auftreten. Die Ermittlung des Orts, an welchem der ohmsche Isolationswiderstand mit der DC-Quelle verbunden ist, kann beispielsweise gemeinsam mit der Bestimmung des ohmschen Isolationswiderstandes erfolgen.

Vorteilhafterweise wird der Wechselrichter deaktiviert, wenn die Zwischenkreisspannung einen vorgegebenen oberen Grenzwert erreicht. Beim erfindungsgemäßen Verfahren kann eine höhere Zwischenkreisspannung notwendig sein, wodurch der Gesamtwirkungsgrad der Wechselrichter-Anordnung sinkt. Bei Überschreitung einer bestimmten Zwischenkreisspannung, beispielsweise 500 V, wird es sinnvoll sein, den Wechselrichter aus Sicherheitsgründen und Gründen reduzierten Wirkungsgrades zu deaktivieren.

Vor und bzw. oder während dem Einspeisebetrieb des zumindest einen Wechselrichters können auch Oberwellen der Wechselspannung am AC-Ausgang bestimmt und bei der Modulation der Leistungteile des Wechselrichters berücksichtigt werden. Da Oberwellen in der Praxis auftreten und die Netzsituation beeinflussen und einen Beitrag zum Ableitstrom leisten, kann bei deren Berücksichtigung eine noch bessere Ausnützung der Wechselrichter der Wechselrichter-Anordnung und somit eine Verbesserung der gesamten Energiebilanz erzielt werden. Oberwellen in der Ausgangswechselspannung können beispielsweise durch selektive Filter oder Fouriertransformationen bestimmt werden.

Die ermittelten Oberwellen können beispielsweise durch Modulation jenes Leistungsteils jedes Wechselrichters, der mit dem AC-Ausgang, der am Neutralleiter des Versorgungsnetzes angeschlossen ist, gedämpft werden und diese Dämpfung durch Modulation jenes Leistungsteils jedes Wechselrichters, der mit dem AC-Ausgang, der am Phasenanschluss des Versorgungsnetzes angeschlossen ist, entsprechend korrigiert werden. Dies stellt eine Methode der Berücksichtigung der Oberwellen dar.

Gemäß einem weiteren Merkmal der Erfindung kann die Gleichspannung am DC-Eingang jedes Wechselrichters gemessen werden und bei der Modulation der Leistungteile jedes Wechselrichters berücksichtigt werden. Die Berücksichtigung der Gleichspannung der DC-Quelle, insbesondere des Photovoltaik-Moduls, kann insbesondere bei Wechselrichter-Anordnungen mit mehreren Wechselrichtern weitere Vorteile mit sich bringen, da die Ansteuerung der einzelnen Wechselrichter auch in Abhängigkeit der einzelnen Eingangsspannungen abhängig gestaltet werden kann. Aber auch bei nur einem Wechselrichter kann die Berücksichtigung der Gleichspannung am DC-Eingang des Wechselrichters bei der Modulation vorteilhaft sein und zur weiteren Erhöhung des Wirkungsgrades beitragen.

Wenn auch während des Einspeisebetriebs des zumindest einen Wechselrichters die Amplitude der Wechselspannung ermittelt und bei der Modulation der Leistungteile jedes Wechselrichters berücksichtigt wird, können beispielsweise Oberwellen während des Betriebs der Wechselrichter-Anordnung berücksichtigt werden und die Modulation an allenfalls geänderte Situationen optimal angepasst werden.

Im Falle mehrerer Wechselrichter werden die Leistungteile jedes Wechselrichters vorzugsweise in Abhängigkeit der gemessenen Anlagenkapazität jedes Wechselrichters moduliert. Dabei wird jeder Wechselrichter unabhängig von den anderen Wechselrichtern so angesteuert bzw. moduliert, dass bei jedem Wechselrichter der anteilig bestimmte maximale Ableitstrom nicht auftritt und der jeweilige Wechselrichter somit zur Energiebilanz beitragen kann.

Bei einer Wechselrichter-Anordnung mit mehreren Wechselrichtern kann im einfachsten Fall der definierte maximalen Ableitstrom durch die Anzahl aller Wechselrichter der Wechselrichter-Anordnung dividiert werden.

Die Anzahl der Wechselrichter der Wechselrichter-Anordnung kann vorzugsweise über Kommunikationsleitungen zwischen den Wechselrichtern automatisch ermittelt werden. Wenn zusätzlich zur Anzahl der Wechselrichter auch die Gleichspannung am Eingang jedes Wechselrichters gemessen und berücksichtigt wird, kann eine besonders ertragsoptimierte Variante der Erfindung implementiert werden.

Ebenso wird die erfindungsgemäße Aufgabe durch eine oben genannte Wechselrichter-Anordnung gelöst, welche zur Durchführung des oben genannten Verfahrens ausgebildet ist. Die Funktionen der Wechselrichter-Anordnung können softwaretechnisch relativ leicht in der Steuereinrichtung der Wechselrichter implementiert werden. Zu den erzielbaren Vorteilen wird auf die obige Beschreibung des Verfahrens verwiesen.

Die vorliegende Erfindung wird anhand der beigefügten Figuren näher erläutert. Darin zeigen:

Fig. 1   ein Blockschaltbild einer Wechselrichter-Anordnung mit einem Wechselrichter;

Fig. 2   die Zeitverläufe der Spannungen an den AC-Ausgängen der Leistungsteile und der resultierenden Wechselspannung des Wechselrichters und des resultierenden Ableitstromes gemäß dem Stand der Technik;

Fig. 3   ein Flussdiagramm zur Veranschaulichung einer ersten Ausführungsform eines erfindungsgemäßen Verfahrens zum Betreiben einer Wechselrichter-Anordnung;

Fig. 4   die Zeitverläufe der Spannungen an den AC-Ausgängen der Leistungsteile und der resultierenden Wechselspannung des Wechselrichters und des resultierenden Ableitstromes bei einem idealen Versorgungsnetz gemäß dem erfindungsgemäßen Verfahren;

Fig. 5   die Zeitverläufe der Spannungen an den AC-Ausgängen der Leistungsteile und der resultierenden Wechselspannung des Wechselrichters und des resultierenden Ableitstromes bei einem Versorgungsnetz mit Oberwellen gemäß dem Stand der Technik;

Fig. 6   die Zeitverläufe der Spannungen an den AC-Ausgängen der Leistungsteile und der resultierenden Wechselspannung des Wechselrichters und des resultierenden Ableitstromes bei einem störungsbehafteten Versorgungsnetz mit unbehandelten Oberwellen bei Anwendung des erfindungsgemäßen Verfahrens gemäß Fig. 3;

Fig. 7   ein Flussdiagramm zur Veranschaulichung einer weiteren Ausführungsform eines erfindungsgemäßen Verfahrens zum Betreiben einer Wechselrichter-Anordnung;

Fig. 8   die Zeitverläufe der Spannungen an den AC-Ausgängen der Leistungsteile und der resultierenden Wechselspannung des Wechselrichters und des resultierenden Ableitstromes bei einem störungsbehafteten Versorgungsnetz mit gedämpften Oberwellen beim erfindungsgemäßen Verfahren gemäß Fig. 6; und

Fig. 9   ein Blockschaltbild einer Wechselrichter-Anordnung mit mehreren Wechselrichtern und einer Batterie.

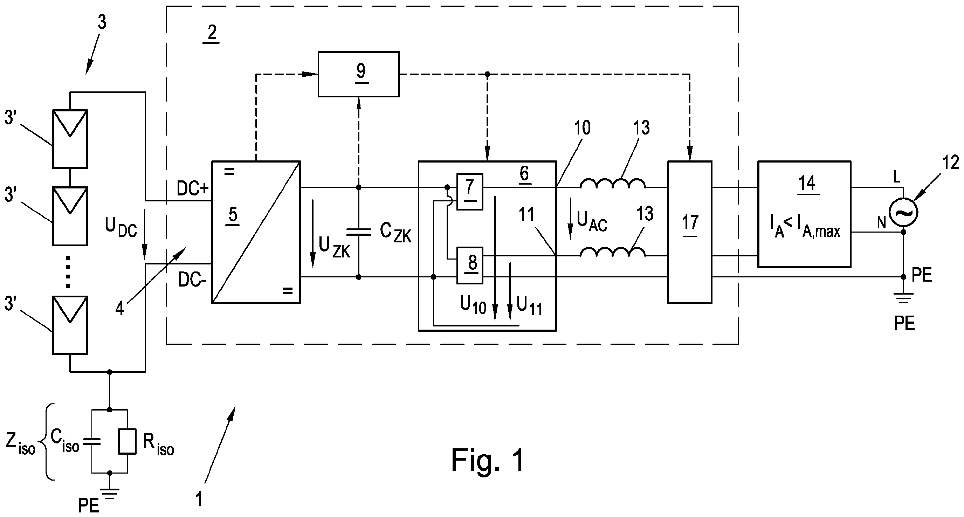

Fig. 1 zeigt ein Blockschaltbild einer Wechselrichter-Anordnung 1 mit einem einphasigen transformatorlosen Wechselrichter 2. Der Wechselrichter 2 dient zur Umwandlung einer Gleichspannung $U_{DC}$, welche von einer DC-Quelle 3, insbesondere einem Photovoltaik-Modul 3' oder einem String mehrerer Photovoltaik-Module 3' bereitgestellt werden, in eine Wechselspannung $U_{AC}$ mit einer Netzfrequenz $f_{AC}$ am Ausgang des Wechselrichters 2. Der Wechselrichter 2 beinhaltet einen DC/DC-Wandler 5 zum Transformieren der Gleichspannung $U_{DC}$ am DC-Eingang 4 in eine Zwischenkreisspannung $U_{ZK}$ an einem Zwischenkreiskondensator $C_{ZK}$. Der DC/DC-Wandler 5 ist vorzugsweise durch einen Aufwärtswandler (Boost-Converter) gebildet. Die Zwischenkreisspannung $U_{ZK}$ wird in einem DC/AC-Wandler 6 in die Wechselspannung $U_{AC}$ umgewandelt. Zu diesem Zweck weist der DC/AC-Wandler zwei Leistungsteile 7, 8 üblicherweise mit entsprechenden Halbleiterschaltern in Brückenschaltung (nicht dargestellt) auf, welche wechselweise angesteuert werden, sodass am Ausgang des DC/AC-Moduls 6 eine Wechselspannung $U_{AC}$ resultiert. Zur Modulation der Leistungsteile 7, 8 ist eine entsprechende Steuereinrichtung 9 vorgesehen. Meist findet eine Pulsweitenmodulation mit einer vorgegebenen Schaltfrequenz statt. Am AC-Ausgang 10 des Leistungsteils 7 liegt gegenüber dem unteren Eingang des Leistungsteils 7 (bzw. dem negativen Pol der Zwischenkreisspannung $U_{ZK}$) die Spannung $U_{10}$ und am AC-Ausgang 11 des Leistungsteils 8 gegenüber dem unteren Eingang des Leistungsteils 8 (bzw. dem negativen Pol der Zwischenkreisspannung $U_{ZK}$) die Spannung $U_{11}$ an. Die beiden AC-Ausgänge 10 und 11 der Leistungsteile 7, 8 des DC/AC-Wandlers 6 bilden gemeinsam den Ausgang des Wechselrichters 2, an welchem die Wechselspannung $U_{AC}$ anliegt, und welcher mit dem einphasigen Versorgungsnetz 12 verbunden wird. Im dargestellten Beispiel ist der AC-Ausgang 10 des Leistungsteils 7 mit dem Phasenanschluss L und der AC-Ausgang 11 des Leistungsteils 8 mit dem Neutralleiter N des Versorgungsnetzes 12 verbunden. In den Leitungen am Ausgang des Wechselrichters 2 können Ausgangsdrosseln 13 angeordnet sein. Darüber hinaus befindet sich am Ausgang des Wechselrichters 2 ein AC-Trenner 17, mit dem der Wechselrichter 2 vom Versorgungsnetz 12 getrennt werden kann. Zwischen dem Wechselrichter 2 und dem Versorgungsnetz 12 ist ein FI-Schutzschalter 14 angeordnet, der einen Summenstrom misst und bei Überschreitung eines definierten maximalen Ableitstromes $I_{A,max}$ gegen Erde PE auslöst. Die Ableitströme $I_A$ resultieren aufgrund von Isolationsfehlern, welche durch einen komplexen Isolationswiderstand $Z_{iso}$ in Form einer Parallelschaltung einer Ableitkapazität $C_{iso}$ und eines Isolationswiderstands $R_{iso}$ zwischen den DC-Quellen 3 und Erde PE repräsentiert ist. Der Ort des Isolationsfehlers, also an welcher Stelle der DC-Quelle 3 der ohmsche Isolationswiderstand $R_{iso}$ mit der DC-Quelle 3 verbunden ist, beeinflusst den Gleichanteil des Ableitstroms $I_A$ ebenfalls. Ideal wäre die symmetrische Anordnung des Isolationsfehlers zwischen den beiden Anschlüssen des DC-Eingangs 4 des Wechselrichters 2, da sich dadurch der kleinste Gleichanteil des Ableitstroms $I_A$ ergibt, weil im Einspeisebetrieb des Wechselrichters 2 in der Mitte die Spannung zur Erde PE absolut am kleinsten ist. Daher ist unter Umständen eine Bestimmung des Orts der Verbindung der DC-Quelle 3 zur Erde PE von Vorteil. Diese Bestimmung kann beispielsweise ein Teil der Messung des ohmschen Isolationswiderstandes $R_{iso}$ sein. Ist der Ort bekannt, kann der Gleichanteil des Ableitstroms $I_A$ über das Ohm'sche Gesetz durch Division der gemessenen Spannung des Isolationsfehlers zur Erde PE durch den ohmschen Isolationswiderstand $R_{iso}$ ermittelt werden. Der Gleichanteil des Ableitstroms $I_A$ vermindert den erlaubten kapazitiven Anteil des Ableitstroms $I_A$, der für die Modulation der Leistungsteile 7, 8 zu berücksichtigen ist.

Um eine Auslösung des FI-Schutzschalters 14 zu verhindern, wird vor dem Zuschalten des Wechselrichters 2 über den AC-Trenner 17 an das Versorgungsnetz 12 der Ableitstrom $I_A$ gemessen oder die Ableitkapazität $C_{iso}$ und allenfalls der ohmsche Isolationswiderstand $R_{iso}$ ermittelt und der Wechselrichter 2 nur dann zugeschaltet, wenn der definierte maximale Ableitstrom $I_{A,max}$ nicht erreicht wird. Andernfalls kann der Wechselrichter 2 nicht an das Versorgungsnetz 12 zugeschaltet werden und die aus der Gleichspannung $U_{DC}$ umgewandelte Wechselspannung $U_{AC}$ kann nicht ins Versorgungsnetz 12 eingespeist werden und kann somit nicht zur Energiebilanz beitragen. Damit verbunden sind natürlich Ertragseinbußen für den Betreiber der Wechselrichter-Anordnung 1, welche insbesondere bei großen und leistungsstarken Anlagen ins Gewicht fallen.

Erfindungsgemäß wird die Modulation der Leistungsteile jedes Wechselrichters 2 unter Berücksichtigung der ermittelten Ableitkapazität $C_{iso}$ und des definierten maximalen Ableitstromes $I_{A,max}$ und der ermittelten Anschlusssituation so angepasst, dass die Amplituden der Spannungen $U_{10}$, $U_{11}$ an den Ausgängen 10, 11 der Leistungsteile 7, 8 unterschiedlich bzw. unsymmetrisch ausfallen. Dadurch wird der Ableitstrom $I_A$ minimiert bzw. optimiert ($I_{A,opt}$) und es ist somit auch dann eine Zuschaltung des Wechselrichters 2 ohne die Gefahr einer Überschreitung des maximalen Ableitstromes $I_{A,max}$ und der Auslösung des FI-Schutzschalters 14 möglich. Somit kann der jeweilige Wechselrichter 2 auch dann positiv zur resultierenden Energiebilanz beitragen, wo er nach dem Stand der Technik deaktiviert bleiben müsste.

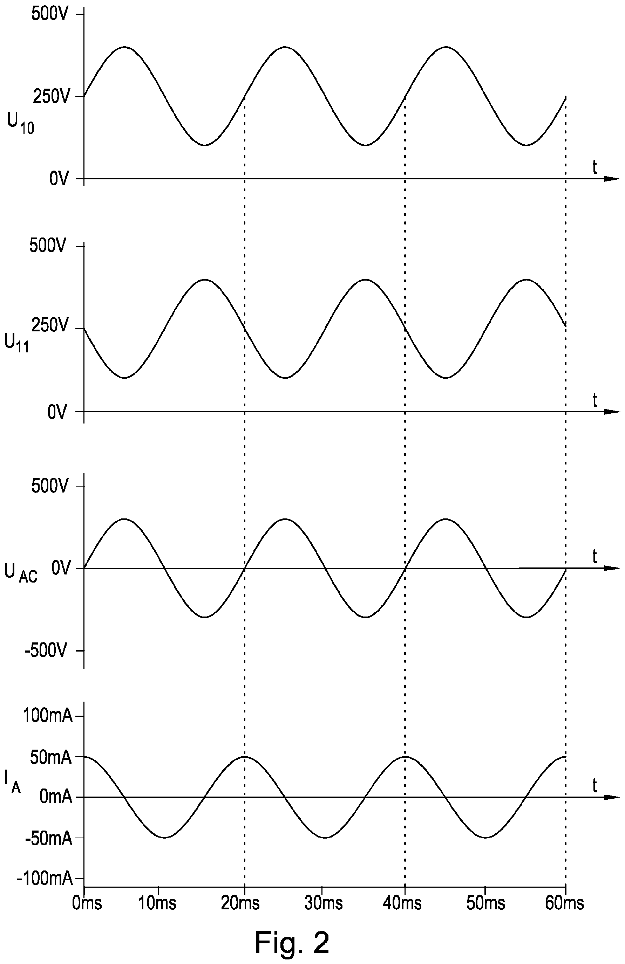

Fig. 2 zeigt die Zeitverläufe der Spannungen $U_{10}$, $U_{11}$ an den AC-Ausgängen 10, 11 der Leistungsteile 7, 8 und der resultierenden Wechselspannung $U_{AC}$ des Wechselrichters 2 und des resultierenden Ableitstromes $I_A$ beim Stand der Technik. Der AC-Ausgang 10 des Leistungsteils 7 des Wechselrichters 2 ist entsprechend dem Blockschaltbild der Wechselrichter-Anordnung 1 gemäß Fig. 1 mit dem Phasenanschluss L und der AC-Ausgang 11 des Leistungsteils 8 des Wechselrichters 2 mit dem Neutralleiter N des Versorgungsnetzes 12 verbunden. Die Modulation der Leistungsteile 7, 8 des DC/AC-Wandlers 6 des Wechselrichters 2 erfolgt so, dass die beiden Spannungen $U_{10}$ und $U_{11}$ gegenläufig mit gleicher Amplitude ausgegeben werden. Die maximal mögliche Amplitude der Spannungen $U_{10}$ und $U_{11}$ wäre die maximale Zwischenkreisspannung $U_{ZK}$ - hier 500V. Wie dargestellt wurde eine Amplitude von 325V gewählt. Die Amplitude der Wechselspannung $U_{AC}$ beträgt ebenfalls 325V - also die Spannung des Versorgungsnetzes 12. Daraus resultiert ein Ableitstrom $I_A$ (hier zum Beispiel mit einer Amplitude von 50 mA und einem Effektivwert von 35mA), welcher durch die Modulation nicht beeinflusst wird.

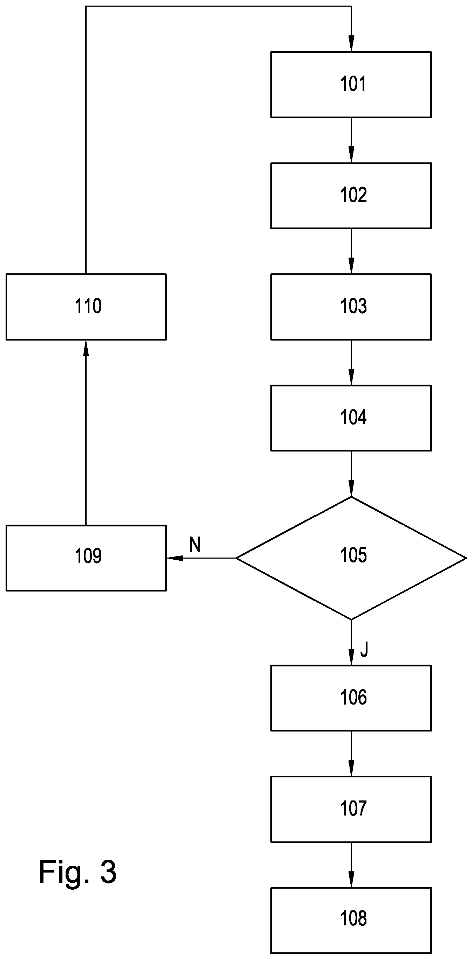

In Fig. 3 ist ein Flussdiagramm zur Veranschaulichung einer ersten Ausführungsform eines erfindungsgemäßen Verfahrens zum Betreiben einer Wechselrichter-Anordnung 1 dargestellt. Gemäß Schritt 101 wird die Ableitkapazität $C_{iso}$ und allenfalls auch der ohmsche Isolationswiderstand $R_{iso}$ mit einem bekannten Verfahren bestimmt und gemäß Schritt 102 wird daraus der kapazitive Anteil des Isolationswiderstands $X_{iso}$ über

$$X_{iso} = \frac{1}{2 \cdot \pi \cdot f_{AC} \cdot C_{iso}}$$

aus der Ableitkapazität $C_{iso}$ und der Netzfrequenz $f_{AC}$ berechnet.

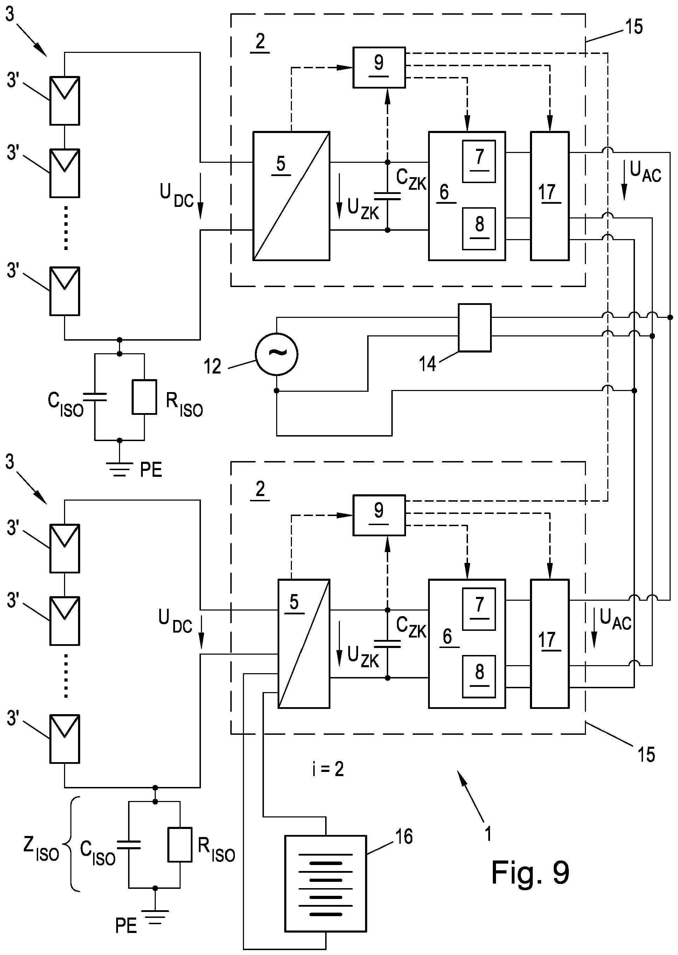

Gemäß Schritt 103 des Verfahrens folgt die Ermittlung des definierten maximalen Ableitstromes $I_{A,max}$. Im Fall eines Wechselrichters 2 und eines FI-Schutzschalters 14 wird der max. Ableitstrom $I_{A,max}$ durch diesen FI-Schutzschalter 14 festgelegt, da dieser ja für einen bestimmten max. Ableitstrom $I_{A,max}$ ausgelegt ist - beispielsweise 30mA. Bei mehreren Wechselrichtern 2 innerhalb der Wechselrichter-Anordnung 1 (siehe Fig. 9) wird der definierte maximale Ableitstrom $I_{A,max}$ beispielsweise durch die Anzahl i der Wechselrichter 2 dividiert, um den maximalen Ableitstrom je Wechselrichter 2 festzulegen. Aber auch hier gilt der max. Ableitstrom $I_{A,max}$, der durch den FI-Schutzschalter 14 festgelegt ist.

Gemäß Schritt 104 wird die kleinere Amplitude der Spannungen $U_{10}$ oder $U_{11}$ berechnet. Dies erfolgt durch Multiplikation des maximalen Ableitstroms $I_{A,max}$ mit dem kapazitiven Anteil des Isolationswiderstands $X_{iso}$. Bei einer beispielsweisen Ableitkapazität $C_{iso}$=1 μF resultiert bei einer Netzfrequenz $f_{AC}$=50 Hz

beispielsweise ein $X_{iso}$=3,18 kOhm und bei einer Zwischenkreisspannung $U_{ZK}$=500 V folgt die kleinere Amplitude der Spannungen $U_{10}$, $U_{11}$ mit ca. 75 V. Die größere Amplitude der Spannungen $U_{10}$, $U_{11}$ folgt durch das Subtrahieren der kleineren Amplitude von der Wechselspannung von 325 V des Versorgungsnetzes 12 (als Produkt der Wurzel aus 2 und der Spannung von 230 V), mit ca. 250 V. Da im Versorgungsnetz 12 aber auch gewisse Toleranz (beispielsweise +/- 10%) realistisch sind, kann die Spannung des Versorgungsnetzes 12 auch kontinuierlich gemessen werden, um einen aktuellen Wert zu erhalten. Dementsprechend muss auch die Amplitude der Wechselspannung $U_{AC}$ 325V betragen bzw. dem aktuellen gemessenen Wert entsprechen. Die Wechselspannung $U_{AC}$ entspricht der Summe der Spannungen $U_{10}$ und $U_{11}$ an den AC-Ausgängen 10, 11 der beiden Leistungsteile 7, 8 des Wechselrichters 2.

Zu diesem Zeitpunkt ist die Anschlusssituation noch nicht ermittelt, also noch nicht bekannt, welcher AC-Ausgang 10, 11 am Phasenleiter L bzw. am Neutralleiter N des Versorgungsnetzes 12 angeschlossen ist. Für die grundsätzliche Ermittlung ist dies aber auch zu diesem Zeitpunkt nicht relevant.

Gemäß Abfrage 105 wird überprüft, ob die ermittelte größere Amplitude der Spannungen $U_{10}$, $U_{11}$ kleiner als die halbe Zwischenkreisspannung $U_{ZK}/2$ beträgt. Ist dies der Fall, kann eingespeist werden. Ist dies nicht der Fall, ist ein Einspeisen nicht möglich. Bei einer Zwischenkreisspannung $U_{ZK}$ von 500V (Amplitude) darf die grö0ere Amplitude der Spannung $U_{10}$ bzw. $U_{11}$ maximal 250V betragen.

Wenn diese Bedingung - also die Amplitude der größeren Amplitude der Spannung $U_{10}$ bzw. $U_{11}$ überschreitet nicht die halbe Zwischenkreisspannung $U_{ZK}/2$ - erfüllt wird, erfolgt zunächst gemäß Schritt 106 die Ermittlung der Anschlusssituation, also die Ermittlung, welcher AC-Ausgang 10, 11 des Wechselrichters 2 an welcher Leitung L, N des Versorgungsnetzes 12 angeschlossen ist.

Am Ausgang des Wechselrichters 2 ist der AC-Trenner 17 angeordnet, der pro Leiter zumindest ein Relais umfasst. Diese Relais können entsprechend angesteuert werden, beispielsweise von der Steuereinrichtung 9 und/oder von den Leistungsteilen 7, 8. Sobald das Relais im Phasenleiter L geschlossen wird, kann eine ausreichend große Wechselspannungskomponente bei 50 Hz gegenüber Erde PE gemessen werden - beispielsweise von der Steuereinrichtung 9. Beim Schließen des Relais im Neutralleiter N ist dies nicht der Fall. Auf diese Weise kann also beispielsweise die Anschlusssituation automatisch ermittelt werden. Üblicherweise werden die Kontakte der Relais des AC-Trenners 17 regelmäßig überprüft, ob diese kleben. Dia automatische Ermittlung der Anschlusssituation kann auch während dieser Prüfung erfolgen.

Gemäß Schritt 107 erfolgt dann eine entsprechende Modulation der Leistungsteile 7, 8 jedes Wechselrichters 2. Das Leistungsteil 7 am Neutralleiter N wird so moduliert, dass sich am Ausgang 10 die Spannung $U_{10}$ mit der kleineren Amplitude einstellt. Das Leistungsteil 8 am Phasenleiter L wird so moduliert, dass sich am Ausgang 11 die Spannung $U_{11}$ mit der höheren Amplitude ergibt. Dies bewirkt, dass der Ableitstrom $I_A$ den maximalen Ableitstrom $I_{A,max}$ nicht überschreitet und demnach der FI-Schutzschalter 14 nicht ausgelöst wird. Vorausgesetzt der Ableitstrom $I_A$ bewegt sich in einem Bereich, in welchem eine Reduktion unter den maximalen Ableitstrom $I_{A,max}$ durch die Modulation der Leistungsteile 7, 8 möglich ist.

Dementsprechend wird gemäß Schritt 108 die Wechselrichter-Anordnung 1 derart betrieben, indem die Leistungsteile 7, 8 unterschiedliche Spannungen $U_{10}$, $U_{11}$ an den AC-Ausgängen 10, 11 ausgeben, sodass der maximale Ableitstrom $I_{A,max}$ nicht überschritten wird und der Wechselrichter 2 mit einem optimierten Ableitstrom $I_{A,opt}$ betrieben wird.

Wenn die obige Bedingung der Abfrage 105 nicht erfüllt wird, erfolgt gemäß Schritt 109 keine Einspeisung ins Versorgungsnetz 12, indem der jeweilige Wechselrichter 2 nicht an das Versorgungsnetz 12 zugeschalten wird.

In diesem Fall wird gemäß Schritt 110 vorzugsweise eine vorgegebene Zeitdauer $\Delta t$, beispielsweise 5 min, gewartet und wieder mit der Bestimmung der Ableitkapazität $C_{iso}$ gemäß Schritt 101 begonnen. Während der Zeitdauer $\Delta t$, kann auch versucht werden, die Zwischenkreisspannung $U_{ZK}$ zu erhöhen. Beispielsweise mit einem Booster von 500 auf 550V (abhängig von den verwendeten Zwischenkreiskondensatoren und der Topologie des Wechselrichters).

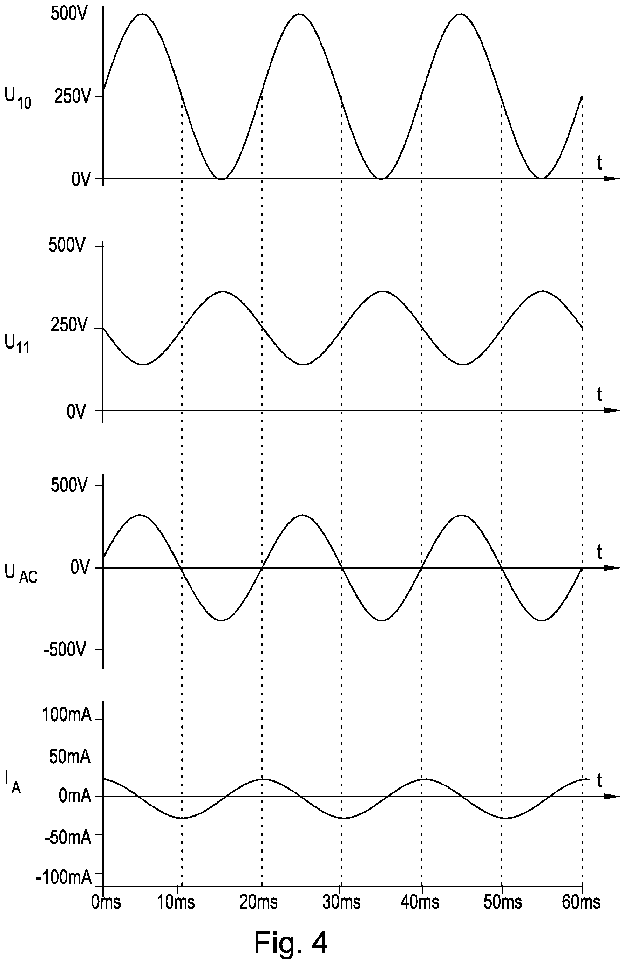

Fig. 4 zeigt die Zeitverläufe der Spannungen $U_{10}$, $U_{11}$ an den AC-Ausgängen 10, 11 der Leistungsteile 7, 8 und der resultierenden Wechselspannung $U_{AC}$ des Wechselrichters 2 und des resultierenden Ableitstromes $I_A$ beim erfindungsgemäßen Verfahren unter der Voraussetzung eines idealen Versorgungsnetzes 12 ohne Oberwellen. Erfindungsgemäß wird vor dem Einspeisen der Wechselspannung $U_{AC}$ in das Versorgungsnetz 12 die Ableitkapazität $C_{iso}$ am DC-Eingang 4 jedes Wechselrichters 2 gegen Erde PE bestimmt und gemäß dem Flussdiagramm aus Fig. 3 die Spannungen $U_{10}$, $U_{11}$ der Leistungsteile 7, 8 ermittelt und die Leistungsteile 7, 8 entsprechend moduliert, sodass sich die Spannungen $U_{10}$, $U_{11}$ mit den entsprechenden unterschiedlichen Amplituden resultieren.

Im dargestellten Ausführungsbeispiel gemäß Fig. 1 ist der AC-Ausgang 10 des Leistungsteils 7 des Wechselrichters 2 ist mit dem Phasenanschluss L und der AC-Ausgang 11 des Leistungsteils 8 des Wechselrichters 2 mit dem Neutralleiter N des Versorgungsnetzes 12 verbunden. Demnach wird die Spannung $U_{11}$ mit der kleineren Amplitude vom Leistungsteil 8 ausgegeben und die Spannung $U_{10}$ mit der größeren Amplitude vom Leistungsteil 7. Wie dargestellt beträgt die Amplitude der Spannung $U_{10}$ ca. 250V und die Amplitude der Spannung

$U_{11}$ ca. 75V. Für die Wechselspannung $U_{AC}$ ergibt sich entsprechend einer Amplitude von 325V (230V mal Wurzel aus 2), welche der Amplitude der Versorgungsspannung 12 entspricht.

Wie zuvor beschrieben, haben also die geringeren Spannungsschwankungen am Neutralleiter N einen positiven Effekt auf die Höhe des Ableitstroms $I_A$.

Durch die asymmetrische Modulation der Leistungsteile 7, 8 resultiert ein optimierter Ableitstrom $I_{A,opt}$, der gegenüber dem Ableitstrom $I_A$ des Standes der Technik (Fig. 2) eine niedrigere Amplitude aufweist. Im dargestellten Beispiel beträgt die Amplitude des optimierten Ableitstroms $I_{A,opt}$ etwa 23mA, bzw. entsprechend einem Effektivwert von etwa 16mA. Ein üblicher FI-Schutzschalter 14 löst beispielsweise bei einem maximalen Ableitstrom $I_{A,max}$ von 30mA aus. Dementsprechend kann der optimierte Ableitstrom $I_{A,opt}$ mit dem erfindungsgemäßen Verfahren vor und während des Betriebs des Wechselrichters 2 gering gehalten werden, sodass dieser unter dem maximalen Ableitstrom $I_{A,max}$ bleibt, solange dies die Bedingungen (geringer Isolationswiderstand, hohe Ableitkapazität, wenig Netzstörungen, kaum Oberwellen, etc.) zulassen. Dementsprechend kann der Wechselrichter 2 länger (früher zuschalten, später abschalten) in das Versorgungsnetz 12 einspeisen und somit mehr zur Energiebilanz beitragen.

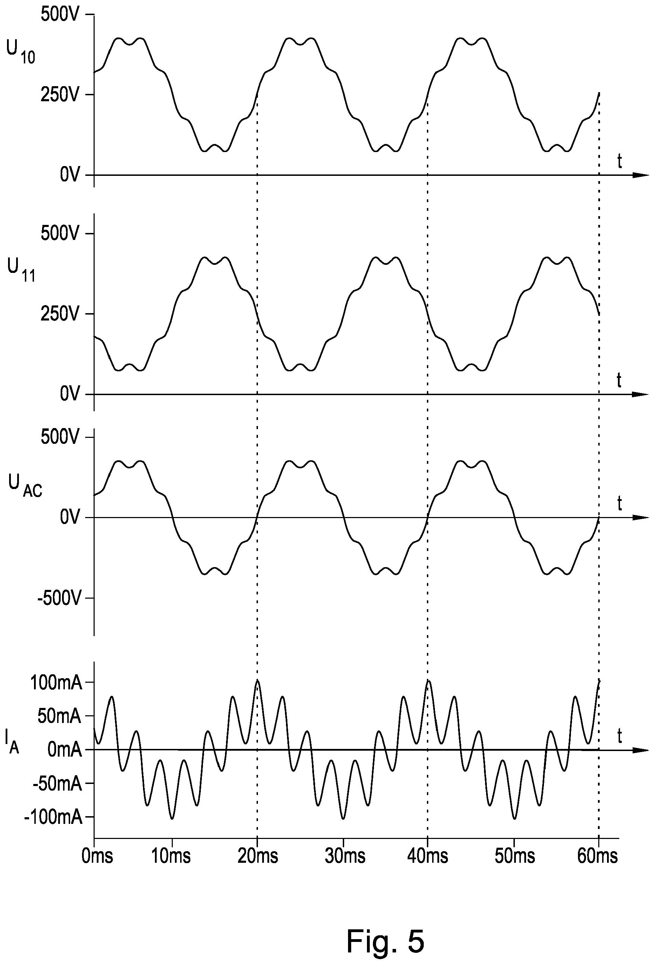

In Fig. 5 werden die Zeitverläufe der Spannungen $U_{10}$, $U_{11}$ an den AC-Ausgängen 10, 11 der Leistungsteile 7, 8 und der resultierenden Wechselspannung $U_{AC}$ des Wechselrichters 2 und des resultierenden Ableitstromes $I_A$ beim Stand der Technik bei einem Versorgungsnetz 12 mit Oberwellen gezeigt. Die Oberwellen resultieren aus Störungen des Versorgungsnetzes 12, welche sich auf die Spannungen $U_{10}$, $U_{11}$ überlagern. Entsprechend überlagern diese hochfrequenten Störungen auch den Ableitstrom $I_A$, wodurch sich dessen Amplitude erhöht - wie dargestellt auf etwa 80mA bzw. einen Effektivwert von etwa 43mA, da die Spannungsschwankungen der Spannung $U_{11}$ am AC-Ausgang 11 des Leistungsteils 8 entsprechend verstärkt sind.

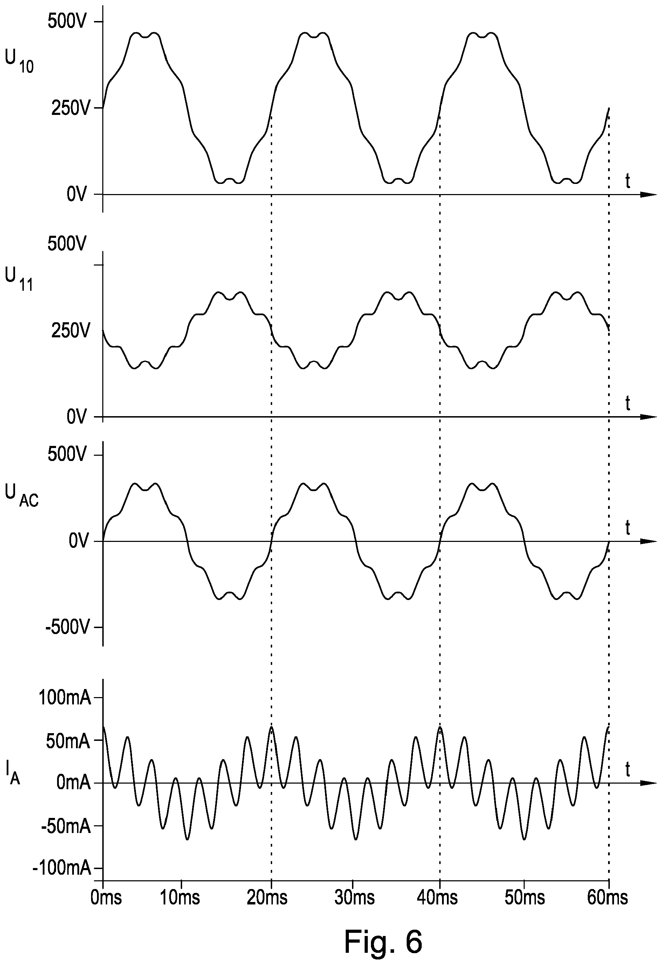

Fig. 6 zeigt die Zeitverläufe der Spannungen $U_{10}$, $U_{11}$ mit Oberwellen und des resultierenden optimierten Ableitstromes $I_{A,opt}$ bei einem störungsbehafteten Versorgungsnetz 12 mit Oberwellen bei Anwendung des erfindungsgemäßen Verfahrens gemäß Fig. 3. Die Amplituden der dargestellten Spannungen entsprechen jenen aus Fig. 4, also 250V für $U_{10}$, 75V für $U_{11}$ und 325V für $U_{AC}$. Die Zeitverläufe unterscheiden sich von jenen der Fig. 4 durch die Überlagerung hochfrequenter Oberwellen am Versorgungsnetz 12, welche sich entsprechend auch auf die Spannungen $U_{10}$ und $U_{11}$ übertragen. Beispielsweise beträgt die Frequenz der Oberwellen hier $f_{OW}$=350 Hz. Durch die Überlagerung resultiert untern anderem eine größer schwankende Spannung $U_{11}$ am Neutralleiter N, welche eine größere Schwankung der Amplitude des Ableitstromes $I_A$ bewirkt. Wie hier dargestellt beträgt die Amplitude etwa 60mA bzw. der Effektivwert etwa 33mA. In diesem Fall wird der definierte maximale Ableitstrom $I_{A,max}$, bei dem der FI-Schutzschalter 14 auslöst, überschritten. Das erfindungsgemäße Verfahren zeigt aber dennoch seine Wirkung, denn im Vergleich zum Stand der Technik gemäß Fig. 5 würde die Amplitude des Ableitstroms $I_A$ noch viel stärker schwanken5.

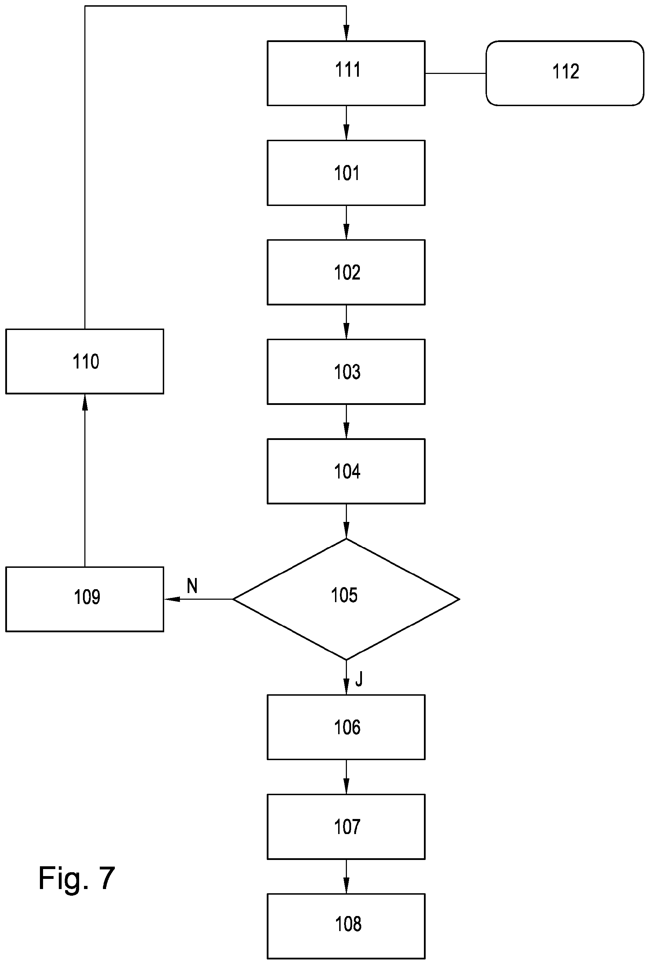

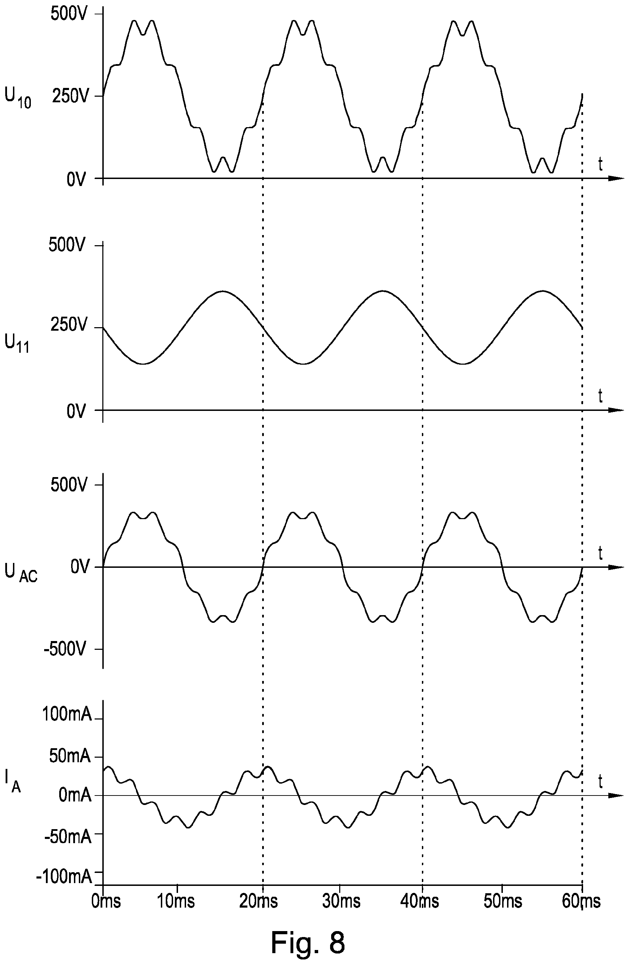

In Fig. 7 ist ein Flussdiagramm zur Veranschaulichung einer weiteren Ausführungsform eines erfindungsgemäßen Verfahrens zum Betreiben einer Wechselrichter-Anordnung 1 dargestellt. Gegenüber dem Flussdiagramm gemäß Fig. 3 ist hier ein Schritt 111 hinzugekommen, bei dem vor und bzw. oder während dem Einspeisebetrieb des zumindest einen Wechselrichters 2 Oberwellen der Wechselspannung $U_{AC}$ am AC-Ausgang 10, 11 bestimmt werden und bei der Modulation der Leistungsteile 7, 8 des Wechselrichters 2 berücksichtigt werden. Die Netzanalyse gemäß Schritt 111 kann durch Ermittlung der Oberwellen bei bestimmten Frequenzen $f_{OW}$ in Schritt 112 erfolgen. Durch die Berücksichtigung solcher häufig in der Realität auftretender Oberwellen kann das erfindungsgemäße Verfahren noch weiter verbessert werden - wie anhand der Fig. 8 dargestellt, was schließlich zu einer noch besseren Energiebilanz führt.

Fig. 8 zeigt die Zeitverläufe der Spannungen $U_{10}$, $U_{11}$ an den AC-Ausgängen 10, 11 der Leistungsteile 7, 8 und der resultierenden Wechselspannung $U_{AC}$ des Wechselrichters 2 und des resultierenden Ableitstromes $I_A$ bei einem störungsbehafteten Versorgungsnetz 12 mit gedämpften Oberwellen und des optimierten Ableitstromes $I_A$ beim erfindungsgemäßen Verfahren gemäß Anspruch 9. Dabei werden die ermittelten Oberwellen durch Modulation jenes Leistungsteils 7 des Wechselrichters 2, der am Neutralleiter N des Versorgungsnetzes 12 angeschlossen ist, entsprechend gedämpft, wie anhand des Zeitverlaufs der Spannung $U_{11}$ ersichtlich ist. Diese Dämpfung wird durch Modulation jenes Leistungsteils 8 des Wechselrichters 2, der mit dem AC-Ausgang 10, der am Phasenanschluss L des Versorgungsnetzes 12 angeschlossen ist, entsprechend korrigiert. Die Korrektur bzw. Dämpfung erfolgt derart, dass die hochfrequenten Anteile der Spannung $U_{11}$ durch entsprechende Filter in den Leistungsteilen 7, 8 an die Spannung $U_{10}$ übertragen werden. Dies ist ersichtlich an der doppelten Amplitude der überlagerten Schwingung auf der Spannung $U_{10}$ gegenüber der Spannung $U_{10}$ von Fig. 7. Dementsprechend weist die Spannung $U_{11}$ keine hochfrequenten Anteile mehr auf.

Es resultiert ein optimierter Ableitstrom $I_A$ mit einer geringeren Überlagerung mit Oberwellen, weshalb der Ableitstrom $I_A$ unter dem maximalen Ableitstrom $I_{A,max}$ bleibt, solange dies die Umgebungsbedingungen (geringer Isolationswiderstand, hohe Ableitkapazität, wenig Netzstörungen, kaum Oberwellen, ...) zulassen. Wie hier dargestellt beträgt die Amplitude etwa 40mA bzw. der Effektivwert etwa 23mA. Somit resultiert eine noch längere Energieeinspeisung.

Fig. 9 zeigt das Blockschaltbild einer Wechselrichter-Anordnung 1 mit zwei Wechselrichtern 2 und einer Batterie 16 zum Zwischenspeichern der gewonnenen Energie. Es können in der Wechselrichter-Anordnung 1 auch mehr als zwei Wechselrichter 2 parallel angeordnet und gemeinsam mit dem Versorgungsnetz 12 verbunden werden. Die Steuereinrichtungen 9 können über eine Kommunikationsleitung 15 miteinander verbunden sein. Der definierte maximale Ableitstrom $I_{A,max}$, bei dem der gemeinsame FI-Schutzschalter 14 der Wechselrichter-Anordnung 1 auslöst, kann im einfachsten Fall durch die Anzahl i der Wechselrichter 2, hier 2, dividiert werden und für jeden Wechselrichter der halbe definierte maximale Ableitstrom $I_{A,max}/2$ als Basis bzw. neuer maximaler Ableitstrom $I_{A,max}'$ für diesen Wechselrichter 2 herangezogen werden und das erfindungsgemäße Verfahren (gemäß Fig. 3 oder Fig. 7) für jeden Wechselrichter 2 mit diesem maximalen Ableitstrom $I_{A,max}' = I_{A,max}/2$ durchgeführt werden.

Eine andere Möglichkeit ist auch die Zuteilung der maximalen Ableitströme $I_{A,max}'$ der einzelnen Wechselrichter 2 nach deren Nennleistung. Wechselrichter 2 der Wechselrichter-Anordnung 1 mit größerer Nennleistung würden dann einen größeren Anteil des gesamten maximalen Ableitstroms $I_{A,max}$ zugeteilt bekommen als Wechselrichter 2 mit kleinerer Nennleistung.

Bei einer ertragsoptimierten Variante einer Wechselrichter-Anordnung 1 mit mehreren Wechselrichtern 2 könnte auch für jeden Wechselrichter 2 berechnet werden, wie viel Nennleistung er pro mA Ableitstrom $I_A$ umwandeln kann. Dies wird aufgrund unterschiedlicher Ableitkapazitäten $C_{iso}$ für jeden Wechselrichter 2 unterschiedlich sein. Dem Wechselrichter 2 mit der geringsten Ableitkapazität $C_{iso}$ pro Nennleistung wird der maximale Summen-Ableitstrom $I_{A,max}$ zugeordnet. Ist das gesamt Kontingent noch nicht ausgeschöpft, wird der nächstbessere Wechselrichter 2 bedient, und so weiter. Dadurch kann bei einem definierten maximalen Summenableitstrom $I_{A,max}$ ein maximaler Ertrag erzielt werden.

Schließlich können bei Wechselrichter-Anordnungen 1 mit mehreren Wechselrichtern 2 auch andere Aspekte der einzelnen Wechselrichter 2, wie Lebensdauer, Betriebsstunden oder dgl. eine Rolle spielen und bei der Anwendung des erfindungsgemäßen Verfahrens (gemäß Fig. 3 oder Fig. 7) berücksichtigt werden.

Das erfindungsgemäße Verfahren (gemäß Fig. 3 oder Fig. 7) zum Betreiben einer Wechselrichter-Anordnung 1 mit zumindest einem, vorzugsweise mehreren, Wechselrichter 2 minimiert das Problem der Deaktivierung der Wechselrichter 2 im Falle der Überschreitung der definierten maximalen Ableitströme $I_{A,max}$, indem durch spezielle Modulation der Leistungsteile 7, 8 der Wechselrichter 2 unter Berücksichtigung der Ableitkapazität $C_{iso}$ sowie der Anschlusssituation die Ableitströme $I_A$ minimiert werden. Da dadurch die Einspeisezeit und Einspeiseleistung erhöht werden kann, resultiert eine bessere Energiebilanz und in der Folge höhere Erträge für den Betreiber der Wechselrichter-Anordnung 1.

**Patentansprüche**

1. Verfahren zum Betreiben einer Wechselrichter-Anordnung (1) mit zumindest einem Wechselrichter (2) zur Umwandlung jeweils einer Gleichspannung ($U_{DC}$) in eine Wechselspannung ($U_{AC}$) mit einer Netzfrequenz ($f_{AC}$), wobei in jedem Wechselrichter (2) die Gleichspannung ($U_{DC}$) einer an einem DC-Eingang (4) angeschlossenen DC-Quelle (3) über einen DC/DC-Wandler (5) auf eine Zwischenkreisspannung ($U_{ZK}$) transformiert wird und die Zwischenkreisspannung ($U_{ZK}$) in einem DC/AC-Wandler (6) mit zwei mit jeweils einem AC-Ausgang (10, 11) verbundenen Leistungsteilen (7, 8), welche von einer Steuereinrichtung (9) wechselseitig moduliert werden, in die Wechselspannung ($U_{AC}$) umgewandelt und an den AC-Ausgängen (10, 11) ausgegeben wird und die Wechselspannung ($U_{AC}$) in ein mit den AC-Ausgängen (10, 11) verbundenes Versorgungsnetz (12) eingespeist wird, **dadurch gekennzeichnet, dass** vor dem Einspeisen der Wechselspannung ($U_{AC}$) in das Versorgungsnetz (12) die Ableitkapazität ($C_{iso}$) am DC-Eingang (4) jedes Wechselrichters (2) gegen Erde (PE) bestimmt wird, und ermittelt wird, welcher AC-Ausgang (10, 11) an welcher Leitung (L, N) des Versorgungsnetzes (12) angeschlossen ist, und unter Berücksichtigung der Ableitkapazität ($C_{iso}$) und eines definierten maximalen Ableitstromes ($I_{A,max}$) sowie der ermittelten Anschlusssituation am AC-Ausgang (10, 11) die Leistungsteile (7, 8) jedes Wechselrichters (2) derart moduliert werden, dass die Amplituden der Spannungen ($U_{10}$, $U_{11}$) an den AC-Ausgängen (10, 11) der Leistungsteile (7, 8) unterschiedlich groß sind.

2. Verfahren nach Anspruch 1, **dadurch gekennzeichnet, dass** die Anschlusssituation am AC-Ausgang (10, 11) bei der Modulation der Leistungsteile (7, 8) jedes Wechselrichters (2) berücksichtigt wird, indem die Modulation des am Phasenanschluss (L) des Versorgungsnetzes (12) angeschlossene Leistungsteil (7) des DC/AC-Wandlers (6) derart erfolgt, dass am AC-Ausgang (10) dieses Leistungsteils (7) die Spannung ($U_{10}$) mit der größeren Amplitude resultiert, und die Modulation des am Neutralleiter (N) des Versorgungsnetzes (12) angeschlossenen Leistungsteils (8) des DC/AC-Wandlers (6) derart erfolgt, dass am AC-Ausgang (11) dieses Leistungsteils (8) die Spannung ($U_{11}$) mit der kleineren Amplitude resultiert.

3. Verfahren nach Anspruch 1 oder 2, **dadurch gekennzeichnet, dass** im Falle des Erreichens des maximalen Ableitstromes ($I_{A,max}$) eine vorgegebene Zeitdauer ($\Delta t$) gewartet wird und vor dem Einspeisen der Wechselspannung ($U_{AC}$) in das Versorgungsnetz (12) die Ableitkapazität ($C_{iso}$) am DC-Eingang (4) jedes Wechselrichters (2) gegen Erde (PE) erneut bestimmt wird und erneut überprüft wird, ob der definierte maximale Ableitstrom ($I_{A,max}$) überschritten wird.

4. Verfahren nach einem der Ansprüche 1 bis 3, **dadurch gekennzeichnet, dass** die Modulation der Leistungsteile (7, 8) jedes Wechselrichters (2) in Abhängigkeit der gemessenen Ableitkapazität ($C_{iso}$) innerhalb vorgegebener Grenzen linear verändert wird.

5. Verfahren nach einem der Ansprüche 1 bis 4, **dadurch gekennzeichnet, dass** bei Erreichen vorgegebener oberer Grenzwerte ($C_{iso\_max}$) für die gemessenen Ableitkapazität ($C_{iso}$) jedes Wechselrichters (2) der jeweilige Wechselrichter (2) deaktiviert bleibt oder deaktiviert wird.

6. Verfahren nach einem der Ansprüche 1 bis 5, **dadurch gekennzeichnet, dass** vor dem Einspeisebetrieb des zumindest einen Wechselrichters (2) der ohmsche Isolationswiderstand ($R_{iso}$) am DC-Eingang (4) jedes Wechselrichters (2) gegen Erde (PE) gemessen wird und bei der Modulation der Leistungsteile (7, 8) zusätzlich zur Ableitkapazität ($C_{iso}$) berücksichtigt wird.

7. Verfahren nach Anspruch 6, **dadurch gekennzeichnet, dass** der Ort einer Verbindung der DC-Quelle (3) zur Erde (PE) ermittelt wird und der ermittelte Ort bei der Modulation der Leistungsteile (7, 8) der Wechselrichter (2) berücksichtigt wird.

8. Verfahren nach einem der Ansprüche 1 bis 7, **dadurch gekennzeichnet, dass** vor und bzw. oder während dem Einspeisebetrieb des zumindest einen Wechselrichters (2) Oberwellen der Wechselspannung ($U_{AC}$) am AC-Ausgang (10, 11) bestimmt werden und bei der Modulation der Leistungsteile (7, 8) des Wechselrichters (2) berücksichtigt werden.

9. Verfahren nach Anspruch 8, **dadurch gekennzeichnet, dass** die ermittelten Oberwellen durch Modulation jenes Leistungsteils (7) jedes Wechselrichters (2), der mit dem AC-Ausgang (11), der am Neutralleiter (N) des Versorgungsnetzes (12) angeschlossen ist, gedämpft werden und diese Dämpfung durch Modulation jenes Leistungsteils (8) jedes Wechselrichters (2), der mit dem AC-Ausgang (10), der am Phasenanschluss (L) des Versorgungsnetzes (12) angeschlossen ist, entsprechend korrigiert wird.

10. Verfahren nach einem der Ansprüche 1 bis 9, **dadurch gekennzeichnet, dass** während des Einspeisebetriebs des zumindest einen Wechselrichters (2) die Amplitude der Wechselspannung ($U_{AC}$) ermittelt und bei der Modulation der Leistungsteile (7, 8) jedes Wechselrichters (2) berücksichtigt wird.

11. Verfahren nach einem der Ansprüche 1 bis 10, **dadurch gekennzeichnet, dass** bei mehreren Wechselrichtern (2) die Leistungsteile (7, 8) jedes Wechselrichters (2) in Abhängigkeit der gemessenen Anlagenkapazität ($C_{iso}$) jedes Wechselrichters (2) moduliert werden.

12. Verfahren nach Anspruch 11, **dadurch gekennzeichnet, dass** der definierte maximale Ableitstrom ($I_{A,max}$) durch die Anzahl (i) aller Wechselrichter (2) der Wechselrichter-Anordnung (1) dividiert wird.

13. Verfahren nach Anspruch 11 oder 12, **dadurch gekennzeichnet, dass** die Gleichspannung ($U_{DC}$) am DC-Eingang (4) jedes Wechselrichters (2) gemessen wird und bei der Modulation der Leistungsteile (7, 8) jedes Wechselrichters (2) berücksichtigt wird.

14. Verfahren nach einem der Ansprüche 11 bis 13, **dadurch gekennzeichnet, dass** die Anzahl (i) der Wechselrichter (2) der Wechselrichter-Anordnung (1) über Kommunikationsleitungen (15) zwischen den Wechselrichtern (2) ermittelt wird.

15. Wechselrichter-Anordnung (1) mit zumindest einem Wechselrichter (2) zur Umwandlung jeweils einer Gleichspannung ($U_{DC}$) in eine Wechselspannung ($U_{AC}$) mit einer Netzfrequenz ($f_{AC}$), wobei jeder Wechselrichter (2) einen DC/DC-Wandler (5) zum Transformieren der Gleichspannung ($U_{DC}$) einer an einem DC-Eingang (4) angeschlossenen DC-Quelle (3) in eine Zwischenkreisspannung ($U_{ZK}$), einen DC/AC-Wandler (6) mit zwei Leistungsteilen (7, 8) zur Umwandlung der Zwischenkreisspannung ($U_{ZK}$) in die Wechselspannung ($U_{AC}$) aufweist, wobei eine Steuereinrichtung (9) zur Modulation der Leistungsteile (7, 8) jedes Wechselrichters (2) vorgesehen ist, **dadurch gekennzeichnet, dass** die Steuereinrichtung (9) zur Durchführung des Verfahrens nach einem der Ansprüche 1 bis 14 ausgebildet ist.

Fig. 1

Fig. 2

Fig. 3

Fig. 4

Fig. 5

Fig. 6

```
                              ┌──────────┐     ┌──────────┐
                         ┌───▶│   111    │─────│   112    │
                         │    └────┬─────┘     └──────────┘
                         │         ▼
                         │    ┌──────────┐
                         │    │   101    │
                         │    └────┬─────┘
                         │         ▼
                         │    ┌──────────┐
                         │    │   102    │
                         │    └────┬─────┘
                         │         ▼
  ┌──────────┐           │    ┌──────────┐
  │   110    │           │    │   103    │
  └────┬─────┘           │    └────┬─────┘
       ▲                 │         ▼
       │                 │    ┌──────────┐
       │                 │    │   104    │
       │                 │    └────┬─────┘
       │                 │         ▼
  ┌──────────┐     N   ◇─────────◇
  │   109    │◀────────│   105    │
  └──────────┘         ◇─────────◇
                            │ J
                            ▼
                       ┌──────────┐
                       │   106    │
                       └────┬─────┘
                            ▼
                       ┌──────────┐
                       │   107    │
                       └────┬─────┘
                            ▼
                       ┌──────────┐
                       │   108    │
                       └──────────┘
```

Fig. 7

Fig. 8

Fig. 9

Europäisches
Patentamt

European
Patent Office

Office européen
des brevets

# EUROPÄISCHER RECHERCHENBERICHT

**Nummer der Anmeldung**

EP 21 21 7364

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y | CN 110 323 959 A (UNIV HEFEI TECHNOLOGY) 11. Oktober 2019 (2019-10-11) | 1-6,8-15 | INV. |
| A | * Zusammenfassung; Abbildungen 1-4 * | 7 | H02M7/5395 |
| | ----- | | H02M1/12 |
| Y | EP 1 229 629 A2 (CANON KK [JP]) 7. August 2002 (2002-08-07) * Absätze [0008], [0011], [0048], [0050], [0060], [0065], [0080]; Abbildungen 1-4 * | 1-5,15 | H02M1/44 H02M1/00 |
| | ----- | | |
| Y | JP 2011 172485 A (MITSUBISHI ELECTRIC CORP) 1. September 2011 (2011-09-01) * Absätze [0013], [0014]; Abbildung 1 * | 1,15 | |
| | ----- | | |
| Y | WO 2014/079775 A1 (SMA SOLAR TECHNOLOGY AG [DE]) 30. Mai 2014 (2014-05-30) * Seite 7, Zeilen 14-20; Abbildung 5 * | 6 | |
| | ----- | | |
| Y | EP 2 787 628 A1 (PANASONIC CORP [JP]) 8. Oktober 2014 (2014-10-08) * Absatz [0126]; Abbildungen 1-4 * | 8-10 | |
| | ----- | | **RECHERCHIERTE SACHGEBIETE (IPC)** |
| Y | EP 3 576 245 A1 (HUAWEI TECH CO LTD [CN]) 4. Dezember 2019 (2019-12-04) * Absätze [0049], [0070], [0082], [0085]; Abbildungen 1-4 * | 11-14 | H02M |
| | ----- | | |

Der vorliegende Recherchenbericht wurde für alle Patentansprüche erstellt

| Recherchenort | Abschlußdatum der Recherche | Prüfer |
|---|---|---|
| Den Haag | 8. Juni 2022 | Kanelis, Konstantin |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 21 21 7364

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

08-06-2022

| Im Recherchenbericht angeführtes Patentdokument | Datum der Veröffentlichung | Mitglied(er) der Patentfamilie | Datum der Veröffentlichung |
|---|---|---|---|
| CN 110323959 A | 11-10-2019 | KEINE | |
| EP 1229629 A2 | 07-08-2002 | CN 1373368 A | 09-10-2002 |
| | | EP 1229629 A2 | 07-08-2002 |
| | | JP 2002233045 A | 16-08-2002 |
| | | KR 20020064680 A | 09-08-2002 |
| | | US 2002105765 A1 | 08-08-2002 |
| JP 2011172485 A | 01-09-2011 | JP 5132797 B2 | 30-01-2013 |
| | | JP 2011172485 A | 01-09-2011 |
| WO 2014079775 A1 | 30-05-2014 | EP 2923213 A1 | 30-09-2015 |
| | | WO 2014079775 A1 | 30-05-2014 |
| EP 2787628 A1 | 08-10-2014 | EP 2787628 A1 | 08-10-2014 |
| | | JP 5899454 B2 | 06-04-2016 |
| | | JP WO2013080465 A1 | 27-04-2015 |
| | | US 2014307489 A1 | 16-10-2014 |
| | | WO 2013080465 A1 | 06-06-2013 |
| EP 3576245 A1 | 04-12-2019 | AU 2018229926 A1 | 19-09-2019 |
| | | CN 106849167 A | 13-06-2017 |
| | | EP 3576245 A1 | 04-12-2019 |
| | | US 2019393802 A1 | 26-12-2019 |
| | | US 2020287476 A1 | 10-09-2020 |
| | | WO 2018161815 A1 | 13-09-2018 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 3465897 B1
- EP 3879283 A1
- EP 3879277 A1